(19) **Europäisches Patentamt**

**European Patent Office**

**Office européen des brevets**

(11) **EP 1 175 757 B1**

(12) **EUROPEAN PATENT SPECIFICATION**

(45) Date of publication and mention
of the grant of the patent:
**26.01.2005 Bulletin 2005/04**

(51) Int Cl.⁷: **H04L 12/56**, H04Q 11/04,
H04L 29/06

(21) Application number: **00930030.2**

(22) Date of filing: **04.05.2000**

(86) International application number:
**PCT/SE2000/000883**

(87) International publication number:
**WO 2000/067435 (09.11.2000 Gazette 2000/45)**

(54) **A SYSTEM FOR DATA TRANSMISSION VIA SEVERAL COMMUNICATION ROUTES**

SYSTEM ZUR DATENÜBERTRAGUNG ÜBER MEHRERE KOMMUNIKATIONSWEGE

SYSTEME DE TRANSMISSION DE DONNEES PAR PLUSIEURS VOIES DE COMMUNICATION

(84) Designated Contracting States:
**AT BE CH CY DE DK ES FI FR GB GR IE IT LI LU MC NL PT SE**

(30) Priority: **04.05.1999 SE 9901621**
**01.03.2000 SE 0000707**

(43) Date of publication of application:
**30.01.2002 Bulletin 2002/05**

(73) Proprietor: **Icomera AB**
**412 92 Göteborg (SE)**

(72) Inventors:
 • **KARLSSON, Mats**
  **412 81 Göteborg (SE)**
 • **BERGEK, Martin**
  **412 62 Göteborg (SE)**
 • **AGERVALD, Magnus**
  **113 64 Stockholm (SE)**
 • **AXELSSON, Kristian**
  **412 82 Göteborg (SE)**

(74) Representative: **Lindberg, Klas Valter Bo et al**
**AWAPATENT AB,**
**Södra Hamngatan 37-41,**
**P.O. Box 11394**
**404 28 Göteborg (SE)**

(56) References cited:
**EP-A1- 0 615 391**    **EP-A2- 0 855 820**
**WO-A1-98/19439**    **WO-A2-99/43133**

 • **RICHARD W. WATSON ET AL.: 'The parallel I/O architecture of the high-performance storage system (HPSS)' FOURTEENTH IEEE SYMPOSIUM ON MASS STORAGE SYSTEMS; IEEE 1995, pages 27 - 44, XP002932730**
 • **YARON RESHEF ET AL.: 'Reliable multilink protocols' IEEE TRANSACTIONS ON COMMUNICATIONS vol. 41, no. 12, December 1993, pages 1780 - 1784, XP002932731**

**Description**

Technical Field

The present invention relates to a system for transmission of data between at least two units that are adapted to inter-communicate, said system comprising several possible communication routes having different qualities. The invention likewise comprises a corresponding method, and a terminal unit for use together with the system in accordance with the invention.

Background

The demands for rapid transmission of data are constantly increasing, and for that reason new solutions for data transmission are required. Existing networks intended for other first-hand uses, such as television or electricity, may be used in some cases for data transmission as well. The prospects of increased proceeds are likely to drive the development towards more extensive use of this at presently free capacity.

In addition, the mobile communication networks are likely to be developed to provide increasingly rapid transmission speeds. Such development will take place in several steps and will lead to multiple increases of speed on the mobile networks within the next few years. In addition, more equipment will be connected wireless to peripheral equipment and other equipment, both that located in its immediate vicinity and-for long-distance communication. As a result, the need for rapid and reliable data transmission increases even more.

Today's users often have access to multiple communication links to networks, such as Internet or intranets of individual enterprises. However, only one link is employed at a time, and consequently considerable capacity is not used. The possibility of sending data via one communication link and of receiving data on another does exist, but in an unintelligent and static way.

In today's data transmission systems the last link to the user is the weakest one. This is true for instance in the case of data services effected via GSM or stationary modem, but also ISDN and other somewhat more rapid transmission methods are bottle-necks that hold up data transmission, because the speed on Internet is many times higher.

Furthermore, fixed connections to Internet are installed in an increasing number of households and offices, leading to a new standard of transmission speeds available to the average user. In consequence, many future data transmission systems will have difficulties in meeting the demands of the new standard, and this is true particularly as regards the mobile systems.

In addition, to achieve sufficient coverage is also a problem found in today's systems. Irrespectively of the user's whereabouts he/she will require access to Internet, and consequently facilities for Internet connection must be available globally. The facilities for connection may vary from place to place and may include:

- •   Fixed connections
- •   Connection via modem
- •   Connection via mobile communication, and
- •   Connection via satellite communication.

The coverage of mobile services is restricted by the fact that the mobile networks are not fully expanded and because of problems arising from radio-shadows in the network in question, which sometimes causes coverage disappearance. No communication system is error-proof. Nor is any system able to offer capacity to an unlimited number of users.

The lack of flexibility of user's choices among several different communication routes leads to poor exploitation of capacity of the respective communication systems and thus to impaired service to the individual user. In addition, competition between different communication systems would be improved, were the choice between said system more flexible.

Consequently, there is a need for a data transmission system that makes use of several transmission links more efficiently, both to more efficiently utilise existing transmission channels and to provide improved performance and to achieve a higher degree of user satisfaction.

From EP-O 696 010 is known a system allowing data to be transmitted on several available channels. Non-available channels are made non-selectable channels by means of a notch filter system, and the application is mainly concerned with this aspect. However, this system does not solve the above problems of making data transmission operations more efficient as regards availability, coverage, costs, etcetera.

From US-5 787 079 it is known to divide a flow of data among several part channels in a radio channel, and the flow of data may be transferred in parallel on different part channels and subsequently be re-assembled by the receiver. Like EP 0 699 010 this patent specification is concerned merely with the technology of transmitting data between a base station and a mobile unit. This system does not either solve the problems with which the present invention is concerned, particularly as concerned availability, coverage and costs.

Furthermore is known a method of asymmetrical transmission, (Asymmetrical Digital Subscriber Line, ADSL), which is a method of increasing the transmission speed from Internet to the local computer whereas the speed is restricted in the opposite direction. ADSL may use a physical connection having different transmission speeds depending on the signal modulation. Also, two physical separate connections to the network may be involved. One possible configuration could be an ordinary telephone modem for the up link and the cable-television network for the down link. ADSL is, however, useable only in cases when high transmission speeds are not required in both directions. Applications such as video conferences therefore are not feasible. On account of the lack of dynamics in the system, the problems of availability, coverage and costs are not solved either.

The division of data into several parallel flows is known from other applications. Although in many cases increased transmission speeds are achieved, they fail to satisfactorily solve the problems with which the subject invention is concerned, viz. to improve the user's possibilities of selecting by himself relevant optimising conditions, such as transmission speeds, reliability, availability and costs. When parallel lines are used in existing applications normally only the same type of communication link is made use of, sometimes even the same physical link. The result is poorer performance and increased risks of total data-flow interruption.

Object of the Invention

One object of the subject invention therefore is to completely or at least partly eliminate the above-mentioned drawbacks inherent in the prior-art, and to provide a system allowing more efficient and more rapid data transmission operations.

This object is achieved in accordance with the invention as the latter is defined in the appended claims.

Summary of the Invention

The invention comprises a system for transmission of data between at least two units adapted to inter-communicate, said system comprising a plurality of possible communication routes exhibiting different characteristics. Each unit further comprises a transmission unit which gathers information on the characteristics of the possible communication routes and, on the basis of said information and of an optimising condition given by the user, divides the flow of data, preferably in the form of a data packet, among at least two of said communication routes. Each unit also comprises a corresponding reception unit, which re-combines the data flow transmitted via said at least two communication routes. An active choice of communication route thus is made to match the optimising condition of the user's choice, and in addition, the choice is made on the basis of the relevant information gathered by the transmission unit. In this manner, the user is given more satisfaction, since the optimising condition is met to a higher extent than in prior-art systems, while at the same time existing communication routes and the like may be made better use of by the supply of relevant status information to the transmission units. The transmission units preferably gather information continuously and effect the division of the data flow automatically on the basis of that information, which makes the above-mentioned advantages still more apparent. Specifically suitable bits of information to be gathered is one or several of the following: fixed and variable prices for the communication routes, maximum and present speed of the latter, sizes of packets that could be transmitted, transportation time (the end-to-end transportation time for packets), ID or similar information on forwarding units, i.e. units comprised by the communication routes, and predetermined priorities made for instance by the user concerning choices of specific communication routes, specific forwarding units or the like. Based on such information it becomes possible for instance to optimise the transmission with respect to one or several optimising parameters, such as price, speed, and preferences as to intermediary forwarding units.

The system in accordance with the invention is particularly suitable for data transmission operations, wherein at least one of the communication routes is a wireless route, since the need for such active optimisation is greatest in those cases. In addition, the system is particularly well suited to solve the data-transmission problems, when one of the communicating units in turn is connected to an additional network for forwarding data to and from that network. In this manner, the transmission system in accordance with the invention may be used in some particularly sensitive parts of a transmission chain. These parts could for instance be particularly expensive, particularly slow, have a particularly small transmission capacity or the like. The invention could be used for mobile, that is wireless, connection to larger stationary networks, such as Internet.

The invention likewise concerns a method corresponding to the system outlined above, and a terminal unit to be used in such a system.

In accordance with a different aspect, the invention concerns a system for transmission of data between at least two units (1, 2), which are adapted to intercommunicate, said system comprising at least two possible communication routes (3-5), each having different characteristics, and wherein each unit comprises a transmission unit which is adapted to gather information on the characteristics of said possible communication routes and to divide the flow of data, preferably in the form of data packets, and which chooses one of said at least two communication routes on the basis of the information thus gathered and of an optimising condition given by the user for each such data flow part. Each unit further comprises a corresponding receiver unit, which re-combines the data flow transmitted via said at least two communication routes.

In this manner a choice of communication route is made for each packet or the like, and thus a smooth transition is made possible from one communication route to another, while at the same time it is ensured that the preferred communication route is utilised at all times.

In addition, the invention concerns a corresponding method.

The invention likewise comprises a system for transmission of data between at least two units adapted to inter-communicate, said system comprising at least two possible wireless communication routes via different base stations and wherein each unit comprises a transmission unit dividing the flow of data, preferably in the form of data packets, among said at least two communication routes and wherein each unit further comprises a corresponding receiver unit, which re-combines the data flow transmitted via said at least two communication routes. Since at least some of the communication routes in this case are mobile, the system becomes particularly powerful, if the networks of several different operators (base stations) are utilised. In this manner access to a larger number of frequencies is obtained, offering improved coverage, availability and transmission speed. This should be compared with the use of one single network the limited frequency supply of which is to be divided among the input lines. In the above case, when the network characteristics are static and similar, gathering of information and subsequent optimisation are not, however, necessary in order to meet the objectives of the invention. Because the transmission unit divides the data flow into equal-size parts and the reception unit re-combines them, the desired effect is obtained.

Brief Description of the Drawings

The invention will be described in the following for exemplifying purposes by means of some embodiments and with reference to the accompanying drawings, wherein:

Fig 1 is a schematic general view of the system in accordance with the invention;
Fig 2 is a schematic view of one embodiment of the system comprising several communication routes in one physical unit;
Fig 3 is a schematic representation of one embodiment of the system comprising several separate communication routes;
Fig 4 is a schematic representation of one embodiment of the system comprising a communication unit having several communication routes;
Fig 5 is a schematic representation of one embodiment of the system involving several users having several communication routes;
Fig 6 is a schematic view of one embodiment of the system comprising an integrated unit having several communication routes;
Fig 7 illustrates one example of realisation of a combined optimising operation involving several optimising parameters;
Fig 8 illustrates one example of an NDIS wrapper according to the invention including installed PAM and NDM;
Fig 9 illustrates one example of output signals transmitted via three NDM.s;
Fig 10 is a general view illustrating the relation between the PAM classes according to the example; and
Fig 11 is a general view illustrating the relation between the NDM classes according to the example;
Fig 12 illustrates schematically how different communication technologies may provide different coverage areas. The coverage will span from being nation-wide (mobile networks) to point-based (Bluetooth, LAN, modem) as well as anything in between. The method described in this application makes it possible to roam between these different technologies; and
Fig 13 is a schematic representation of a system in accordance with the invention, wherein via multiple communication links the client communicates with a "remote server" via a server in the system.

Description of Preferred Embodiments

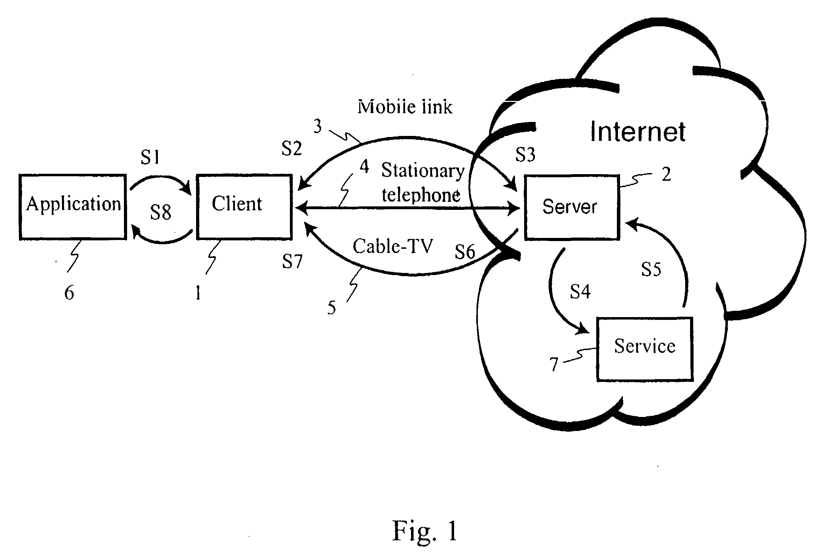

As illustrated in Fig 1, the system of the invention comprises several parallel communication links, the objective of which is to solve or reduce the problems outlined previously herein. The system comprises at least two units 1, 2, which are adapted to inter-communicate, and the system comprises a plurality of possible communication routes 3-5 exhibiting different characteristics. Each unit comprises a transmission unit, which gathers information on the characteristics of the possible communication routes and, on the basis of that information and of an optimising condition given by the user, divides the flow of data, preferably in the form of data packets, among at least two of said communication routes. In addition, each unit comprises a corresponding reception unit, which re-combines the data flow transmitted via said at least two communication routes.

The user or the application 6 utilising the system in accordance with the invention may for instance request communication with another unit, such as to obtain a service 7 on Internet. Normally, a request of this kind is transmitted directly to the supplier of the service, who then sends his answer, if any, back via the same communication link on which the original request was transmitted. In exceptional cases the return link is not the same as the original one but in these cases the choice of up and down link is determined statically. By positioning a reception unit in the form of e. g. a computer on Internet and making all requests and answers pass therethrough active choices of communication routes within the system are made possible.

The following user case describes the flow from the instance the request is made to the return of the results. The user initially executes an operation in an application, which causes transmission of a request (step S1). The user's transmission unit, i.e. the client part of the system, processes the request and forwards it via one or several communication links to the reception unit, i.e. the server part of the system, which in turn may be connected to another network, such as Internet. Together with the request is transmitted also other information needed by the server to óptimise the transmission of the answer to the request (step S2). The server then receives the request (step S3) and performs the requested service. This may be a local service on the server or involve the server in turn transmitting a request for a service on Internet (step S4).

The answer to the request is then received by the server (step S5), and based on information gathered on existing communication links the answer is divided and is returned to the client via the various communication links (step S6). As will be described in more detail below, for the optimising operation, the server uses information on the receiver, the measured transmission speed and current price information regarding the various communication routes, etcetera. The client then receives data via the different communication links and re-combines the data flow into its original form (step S7), and the result is delivered to the application that made the request (step S8).

The system in accordance with the invention makes an active and "intelligent" choice of different communication links in both directions, resulting in possibilities of optimisation with respect to several different criteria.

In cases when the characteristics of the communication links are equal and static, it will not be necessary to optimise the data flow (steps S2 and S6 are modified).

Application 6 could be for instance a mail programme, a browser, or any other programme using data transmission. The transmission in accordance with the invention preferably is made transparent to the application because the division takes place on protocol level in the computer.

The client part 1 may be realised in the from of a driver for network connection. All communications with the network then takes place via this new driver, which consequently is able to optimise the flow. According to the invention, the client can for instance gather and thus have access to the following information, viz.:

- maximum and current transmission speeds in the respective direction, which makes speed optimisation possible by giving priority to high-speed links in case of large amounts of data.
- Type of subscription and supplying operator, rate system and current tariffs, allowing price optimisation by selection of the cheapest communication link that at the same time has sufficient transmission speed,
- identification of available forwarding servers for the different communication routes and their individual collective characteristics, which allows speed maximisation by choice of a server under low load and price minimisation by choice of a server positioned in a geographically advantageous location.

The communication routes, 3-5, consist of a connection to the receiver unit having a well defined interface to the client part. Preferably, all communication links use the same communication protocol, for example TCP/IP, which facilitates the process of transmission of data packets via the various routes. The communication routes may consist of fixed networks, such as local data networks (LAN), electrical mains or cable-television networks, or mobile networks, such as GSM-900 (Global Service Mobile 900), GSM-1800, GPRS (General Packet Radio Service), EDGE, WCDMA, Bluetooth and Radio-LAN. When the system uses mobile networks it is likewise possible, although not obligatory, to use the mobile networks of different operators as separate communication routes. When the network of the same operator is used for several communication links the latter do not necessarily have to compete for transmission capacity, if the connection takes place for instance at different frequencies to the same base station or to different base stations. In this case the optimisation is within the specifications of the mobile networks and takes place automatically.

It is particularly advantageous to use the data transmission method in accordance with the invention, when one of the communicating units is connected to an additional network. This additional network could be an intranet, a WAN (Wide Area Network), such as Internet, or a local network (LAN) to which two or more computers are connected. The unit that is connected to the network preferably has one or_several high-speed connections to the network. Requests are received and forwarded, and the corresponding answers are returned to the client. The server could for instance gather, and thus have access to the following information, viz.:

- maximum and current transmission speed in the respective directions, allowing speed optimisation by giving priority to high-speed links;
- type of subscription including operator, rate system and current tariffs, allowing price optimisation by choice of the cheapest communication link that also has sufficient transmission speed.
- identification of the client communication links and their individual and collective characteristics, allowing maximisation of speed for market segmentation and increased transmission reliability.
- user identification and password, allowing user identification and authorisation checks.

The external services available on the additional networks and with which the user is able to come into contact in this manner via the transmission system in accordance with the invention principally could be any existing and future network-supplied services. This is made possible, since all that is needed to perform the service is offered by the application as input data to the client. The input data is re-created by the client part to its original form.

Information Gathered by The System Units When Needed

In the system in accordance with the invention an "intelligent" division of data and re-assembly thereof takes place as well as an "intelligent" choice of different communication links to optimise the transmission with respect to different criteria. In order to achieve this it is necessary that each one of the two communicating units, i.e. the client and server parts, can send the data flow over multiple communication links and perform this intelligent division and re-assembly of the data flow. This intelligent division is made possible because the communicating units gather information allowing optimisation of the transmission of data between the units, i.e. between the client and the server.

One kind of relevant information that may be gathered is the price. By price is to be understood herein on the one hand fixed and on the other variable costs. The fixed prices could be e.g. the price per call, per connection or per month. The variable part relates to a price calculated per time unit or per packet/bit. Normally, the prices vary both in the short and the long run, a Eact that the inventive system is able to take into consideration. The price information preferably is stored in the server and is spread therefrom to all clients concerned. The price quotation could be of a valid-until-further-notice character or be valid for a defined period of time only. The first type of quotation preferably is given a version number, offering the client program easy access to the latest quotations with only minimum communication with the server.

In addition, speed is of essence. The speed is defined herein as the amount of data transmitted per time unit. It could be speed as experienced by the user and the speed on a link included in the system. Most networks, and in particular Internet, consists of a large number of links of which the weakest one largely sets the pace of transmission between two points. In consequence hereof, the speed of the flow of received data corresponds to the speed of the weakest link. Some links will have different speeds in different directions. For example, GPRS is likely to offer larger capacity initially on the up link than on the down link.

For each type of communication link there is also defined a maximum packet size. For example, the CAN bus uses in cars 8 bytes-size packets whereas the packet size in GPRS probably will be in the order of 300 bytes.

For each connection between two points on a network there will always be a certain minimum time for packet travel. This piece of information is interesting, since a request often could be accommodated within precisely these packets and because in those cases it is advantageous to use the link where the time of transport is the shortest. The time of transport to the client of each user is updated at a predetermined periodicity. In the case of GPRS time measuring from the server to the operator's forwarding unit (gateway, GW) is free, whereas it costs money to measure the time all the way up to the client. For that reason the transportation time to GW in this case preferably is measured so as to include a standard extra-time charge for the communication between GW and client. When the number of GWs for GPRS per country is limited, information on transportation time from a server to each operator's GW will be measurable at a predetermined periodicity and consequently it will be possible for the server to store that information and use it for all communication towards the user having GPRS units. There is nothing to prevent measurement of transportation times over the mobile links more frequently, but since this is more expensive it is desirable to avoid doing so as much as possible. Of the transmission time, the time of transport is the dominating factor in the case of small amounts of data whereas the transmission time is the decisive one in the case of large amounts of data.

Essential information could also be the identity of and the information on the servers comprised in the system. There are several reasons why users would want to employ different servers. One such reason could be for instance a temporary stay in another country where there is a local server. By using this server, it may be possible to reduce the transmission time. Another reason may be to increase the system safety and to make it possible to connect and disconnect servers without affecting the users or indeed even without the users noticing. The system also needs information on the geographical location of the servers and on the capacity of the connection to the network. Finally, information is also needed on the costs for connecting the server to the network. All this information may vary with the time of day. For example, some servers may be open only during certain hours.

It may likewise be of interest to choose a link on the basis of other grounds than the price and the transmission speed. When the transmission links are three mobile links an operator may wish in the first instance to make use of the capacity of his own network before buying capacity from another operator. The priority-selection information of this type may be stored in the server. In addition, during operation it could be possible for the user to make a preference whether the system is to optimise with respect to most favourable price or highest speed, as will be described in more detail in the following.

When the user's unit is being configured, some information preferably also is entered. This information relates to the type of links and the information required to communicate therewith. This comprises also information regarding how often the client updates the server and on the progress of the communication.

In addition, it may be important to know the geographical location of the client. By knowing the the user's position it becomes possible to select the most advantageous server. It could also be possible for the user to enter his geographical location himself.

The table below summarises examples of information that that it may be valuable for the units incorporated in the system in accordance with the invention to gather, where such information may be gathered as well as how such gathering activities may be effected.

| Summarising Table on Information Gathering | | |
|---|---|---|
| Type of Info | Source of Info | Gathering Method |
| Price | Server | Defined |
| Speed(maximum) | Server | Defined |
| Speed (current) | Client/Server | Measured |
| Packet size | Server | Defined |
| Transportation time | Client/Server | Measured |
| Server ID/Info | Server | Defined |
| Priority | Client/Server | Defined |
| User Setting | Client | Defined/Measured |

Optimisation of Data Transmission

The system is complex and there may be a considerable number of parameters and preferences that guide the optimisation procedure. However, the optimisation is based on an optimisation condition defined by the user. This optimisation condition could, however, in turn comprise several different optimising parameters. In this case different priorities should, however, be attributed to the different parameters in order to indicate their relative importance. Four examples of optimisation areas are given below.

According to the first example, the optimisation is made on the basis of the parameter price, which often is desirable. Given all necessary information on price in the manner indicated above for each individual link the total price for the respective link is calculated. One of the links will be the cheapest one. Purely price-based optimisation therefore will result in all transmission being carried out on the cheapest link. As the prices may vary, this may however by changed during a transmission operation.

One very important optimisation parameter is transmission speed. Speed optimisation may be carried out on the basis of the following formulas:

$$f(x_1, x_2, \ldots, x_n) = \max(t_1, t_2, \ldots t_n) \qquad [1]$$

$$t_i = [\, t_{10} + s * x_i / v_i \,] * h(x_i) \text{ for } i = 1, 2, \ldots, n \qquad [2]$$

$$h(x_i) = 1 \text{ for } x_i > 0 \text{ and}$$

$$= 0 \text{ for } xi <= 0 \text{ for } i = 1, 2, \ldots, n \qquad [3]$$

$$x_1 + x_2 + ... + x_n = 1 \qquad\qquad [4]$$

$$0 <= x_i <= 1 \text{ for } i = 1, 2, ... , n \qquad\qquad [5]$$

when n> = 2; where $x_i$ is the part data transmitted on link i; $t_i$ the time from dispatch of the first packet to reception of the last packet over link i; $t_{io}$ is the transportation time between server and client in the direction in question on link i; $v_i$ is the speed of transmission on link i; and s is the total amount of data to be transmitted.

The optimisation procedure is divided into three parts: The request is sent to the server, the server performs the service and finally the response is returned to the client. In the text below n=3.

In order that the dispatch of the request, in part 1, be as rapid as possible, it is sent on the link having the shortest transportation time, i.e. $\min(t_1, t_2, t_3)$. Information on which one of the links that has the shortest transportation time is derived on the one hand from previous transmissions and on the other from the connection procedure in connection with the on-going session. Together with the request, the client also sends information on the speed ($v_1$, $v_2$, $v_3$) with which the client received the previous transmission on the respective link.

The time the server needs to perform the service, i.e. part 2, is beyond the control of the system and preferably is not handled by the optimisation algorithm.

The result to be dispatched from the server in part 3 to the client is to be divided among the three links of the system. During the client's request in part 1 information was sent on the client's latest reception speeds. These two pieces of information are used together with the transport time data relating to the three links in order to minimise [1] with respect to $x_1$, $x_2$, $x_3$ according to secondary conditions [4] and [5]. In other words, the objective is to minimise the time needed for the latest packet received, which leads to a percentage division of the flow of data between the different links.

f is a function in $R^3$. The secondary condition [4] is a plane intersected in A=(1,0,0), B=(0,1,0) and C=(0,0,1). [5] causes limitation of the defined set of f to the triangular surface that A, B, and C defines. The maximum of $t_1$ is in A and declines linearly towards the line BC and on line BC it discontinuously becomes zero; the maximum of $t_2$ is in B and declines linearly towards line AC and on line AC it discontinuously becomes zero; the maximum of $t_3$ is in C and sinks linearly towards line AB and on line AB it discontinuously becomes zero. In cases when the three transportation times are of corresponding magnitude an unambiguous solution $x_1$, $x_2$, $x_3$ is obtained somewhere between A, B, and C and $t_1 = t_2 = t_3$ . In case for instance $t_{10} >= t_{30} + s / V_2$ and $t_{10} >= t_{30} + s/v_3$. a solution is obtained somewhere on the line between B and C, i.e. $x_1$=0. -In case both $t_{20} >= t_{10} + s / V_1$ and $t_{30} >= t_{10} + s/v_1$ a solution in point A is obtained, i.e. $x_1$=1 and $x_2$=$x_3$=0.

The client informs the server of the measured values of $v_1$, when one of two criteria are met, viz.: either a predetermined amount of data has been received or a predetermined time has lapsed. These two parameters are set by the user. Accordingly, the server is able to adapt the selection of communication links during rapid variations of the transmission speeds via the different links. Small amounts of data will give preference to the links showing the shortest transportation time whereas large amounts of data preferably will be sent via high-speed transmission links. Should one link cease to function, the server will be informed accordingly as a result of $v_1$ being lowered to zero, which de facto results in disabling of the link. Should the client find out later that communication via this link has been resumed, the server will be informed accordingly and the link again be put into service.

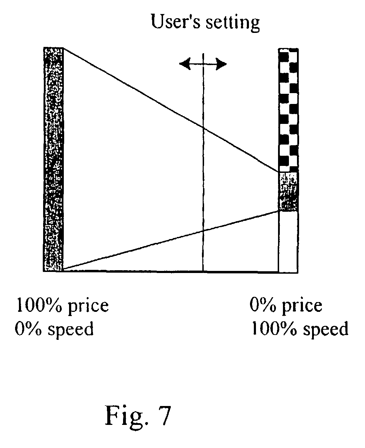

As mentioned previously, it is likewise possible to combine several optimisation parameters within the scope of the invention. For instance, price and speed may be combined. In order to enable compromise solutions and thus to make it possible to offer precisely the capacity that the client is prepared to pay for, the user is offered an option to choose how the price and the speed, respectively, should be weighted in the optimisation procedure. Often, price and speed are opposites, i.e. it is not possible to simultaneously achieve both the lowest price and the highest transmission speed. The extremes of optimisation of price and speed, respectively, have been described above. The combination thereof may be made by simple linearisation as shown in Fig 7. To the left in the drawing figure, all data are sent on the cheapest link. To the right, data is transmitted divided in the manner providing the most favourable transmission speed as calculated in the manner described above.

Optimisation may also be made on the basis of choice of server. The following procedure is followed for instance when a system consisting of three mobile links connected to Internet via several GWs is started. The client connects to the same server as at the latest instance of use. The server then sees which operator's gateway that the client communicates with. The server informs all other servers that it has a client via a certain operator's GW. All other servers then measure the transportation time to the same GW, and the result is sent to the original server. The original server sees whether another server can offer more favourable transportation time to this GW. Should a server be in a position to offer a significantly better transportation time to the operator's GW, the server hands over the responsibility to that server.

The transportation times of the servers to the most common gateways will, however, be rather static, and consequently there might be reasons for storing the corresponding data in each server.

Examples of Alternative Embodiments

The five components that are included in the embodiment of the system in accordance with the invention described above (application, client part, link, network and server) may be combined physically in different ways, providing different areas of use and functionalities.

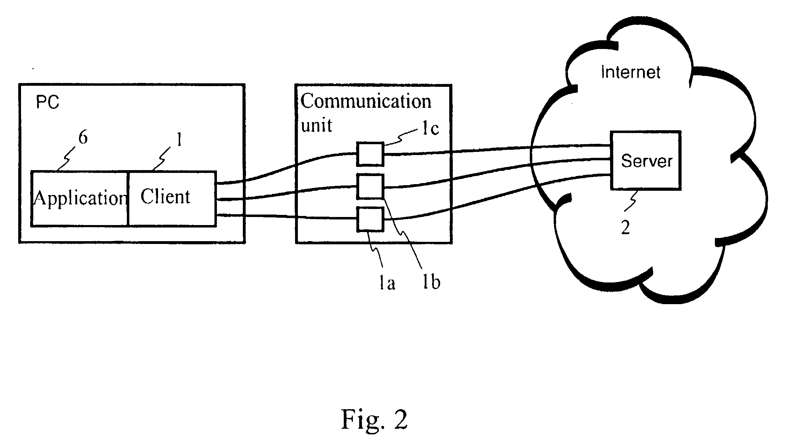

According to one embodiment illustrated in Fig 2 application 6 and client part 1 are integrated in one unit, for example a portable computer, i.e. the drive routines for division of data etcetera are installed on the computer. Divided data are sent via cable or in wireless mode to the communication unit, which in this case is a physical unit comprising several independent telephone units la-c. Preferably, the telephone units are located in close vicinity to one another and preferably they share the same source of power but otherwise they do not communicate with one another. The flow of data is forwarded only by the telephone units included in the communication units to the network of the respective communication link. The networks of the communication links are interconnected with stationary networks, such as Internet, where the receiving server part 2 is positioned.

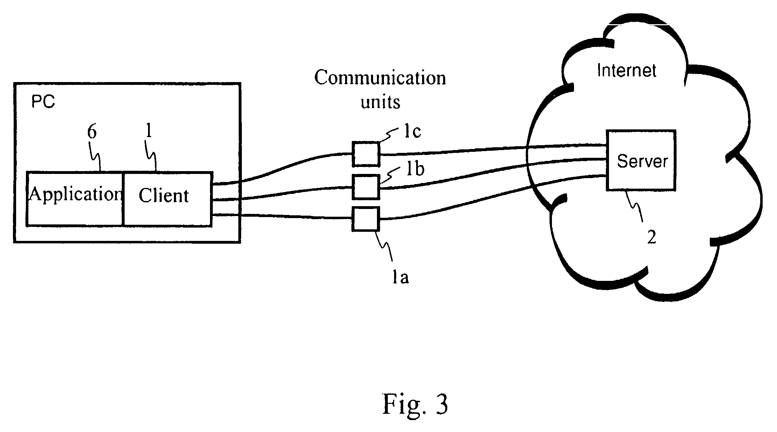

According to an alternative embodiment, shown in Fig 3, application 6 and client part 1 are interconnected in the same way as in the previous embodiment. In this case, the various communication units 1a-c are not, however, integrated in one physical unit but are separate units. If the user should want to communicate with Internet via several parallel lines but is able to contribute himself with only one communication link, several links may be made available by loan of capacity from neighbouring communication units. They may have accepted the loan of capacity in advance or else the question of compensation may be solved by means of an intelligent billing system. To enable the transmission between the user's client part and the various communication units to be effected as convenient as possible wireless transmission mode preferably is used. The various communication links need not, however, in this case be of the same type. For example also modems, electricity mains or cable-television may be used as communication links.

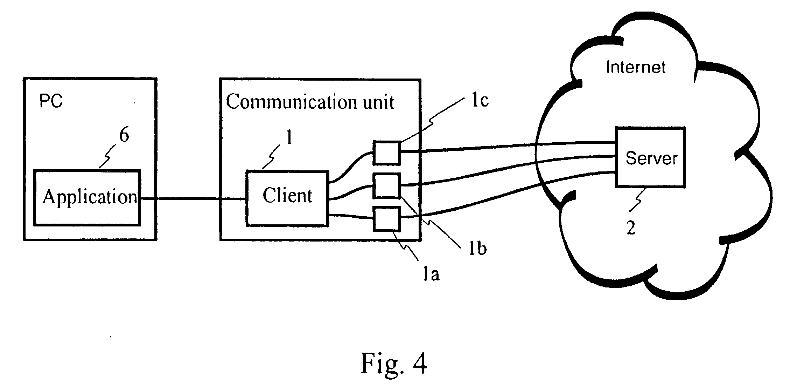

In a further alternative shown in Fig 4 the client part 1 is combined with one or several communication units 1a-c in the same unit. In this manner an independent unit is created, which is able to communicate with a separate application 6 on one hand and towards the network of a separate communication link on the other. Thus a separate communication unit is made possible, having no other function than to divide data in an intelligent manner among different lines. The application must be connected separately for instance via a serial port.

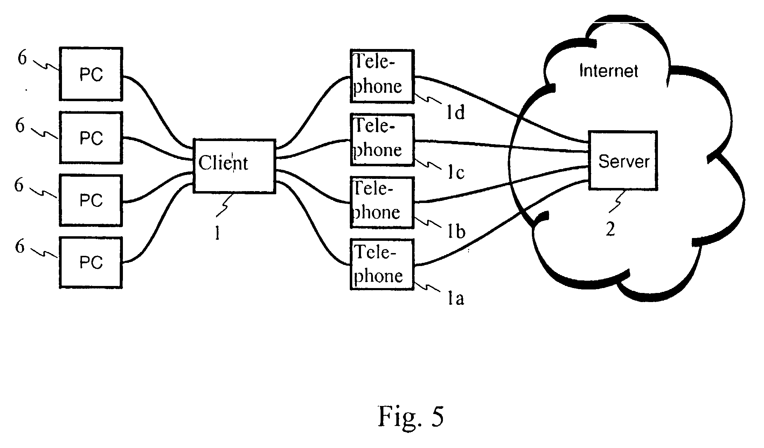

Application 6, client part 1 and the communication unit 1a-d could also be three physically separate units. Thus, the client part may act as the "spider in the centre of the cobweb" and on the one hand be in contact with the respective applications 6 of one or several users and on the other with one or several communication links lad. This situation is illustrated schematically in Fig 5. In this case the client part coordinates data from the different users and optimises the use of the different communication links. A typical field of use is by a group of user, for instance consultants visiting a customer, who wish to share one and the same communication method.

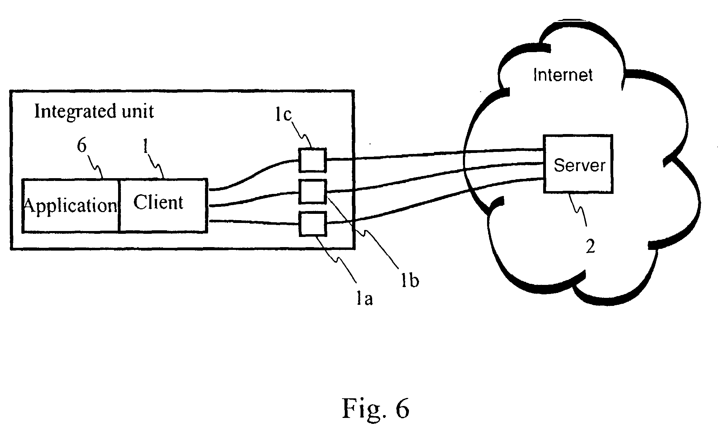

Alternatively, application 6, the client part 1 and the communication unit 1a-c could also be integrated in a common unit, as shown in Fig 6. This unit thus is able to satisfy all user need on the client side. Physically, the product may be similar to a small hand-held computer having several mobile telephone antennae or be a telephone that may be used as a mobile laptop modem.

The physical unit that might be used to transmit data over multiple lines thus could be realised as follows: The terminal has multiple parallel lines on one or several printed cards in a physical unit. Consequently, the lines of the terminal may consists of several separate telephone units, each having its own SIM card. Alternatively, a common SIM card may be used for a number of lines. The unit is also equipped with one transmission step and one antenna per line. Also in this case it is possible, as an alternative, to divide the transmission step and/or the antenna among several lines. While the lines of the terminal thus are separate they do, however, preferably share the battery and the casing. The different lines in the terminal preferably are also able to inter-communicate internally as regards certain information, such as control information, such that all lines do not transmit on maximum efficiency simultaneously, which might be beyond the battery capacity. Also, the different lines may share the same bluetooth, buffer memory, etcetera. The various lines of the terminal may consists of the same kind of units or else they could be different ones, such as three GPRS units, two GPRS units and one EDGE unit, one GPRS unit, one EDGE unit and 1 W-CDMA unit.

The terminal may be conceived to transmit data only, but could also have conventional mobile-telephone functions, i.e. it may be used as an ordinary mobile telephone. The terminal having multiple lines could also comprise the function of a hand-held computer, i.e. the computer and the terminal built into one unit.

In some applications there is a need for higher-speed transmissions than conventional network interface cards could cope with. To obtain higher speeds it becomes necessary to buy more advanced network interface cards at many times higher costs. The invention makes it possible to solve this problem at a fraction of the cost by transmitting data on several parallel lines when the cards are standard network interface cards.

Examples of Implementation of the Invention

In the following an embodiment will be described, using several transmission lines in parallel. More specifically the embodiment is directed to a packet-based parallel data transmission based on a client/server solution, where the operative system, here the network subsystem of Windows NT, is modified in such a way that the TCP/IP-stack is able to transparently send packets over multiple transmission lines. The same process is repeated for incoming traffic, i.e. the TCP/IP-stack is not aware of the fact that the packets are transmitted in parallel.

In this embodiment Windows NT is used as the operative system of the system. The subsystem of Windows responsible for dealing with the lower layers of networking is called the *NDIS wrapper* (NDIS = Network Device Interface Specification) and provides the interface between the various networking parts. The parts themselves are represented as *Miniports*, usually in the form of files ending with the suffix "SYS". These device drivers can be divided into two categories, protocols and adapters. The NDIS wrapper is responsible for loading these drivers and for keeping track of which protocols are using which adapters. This is also known as *binding*, i.e. a protocol binds to one or several adapters.

The protocol device drivers implement a specific communication protocol at the transport layer, e.g. IP. They are responsible for sequencing a data stream into packets and framing these packets. By framing is here meant the process of adding header information to the packet.

The adapter device drivers are responsible for transmitting blocks of data to the physical medium. They are also responsible for signalling to the upper layers when incoming data is available.

The TCP/IP stack on Windows NT is the component responsible for implementing the IP protocol and associated services, e.g. TCP and UDP. The protocol itself requires an IP address for each adapter it binds to. The stack is also capable of *IP forwarding,* meaning that any IP packets arriving with a destination address other than any of the local adapters' will be "forwarded" to another computer. The TCP/IP stack decides which adapter to use when sending IP packets based on the contents of a *routing table*. This table contains a list of IP addresses and associated *masks*, i.e. values that specify which parts of the corresponding IP address should be considered valid when doing routing calculations.

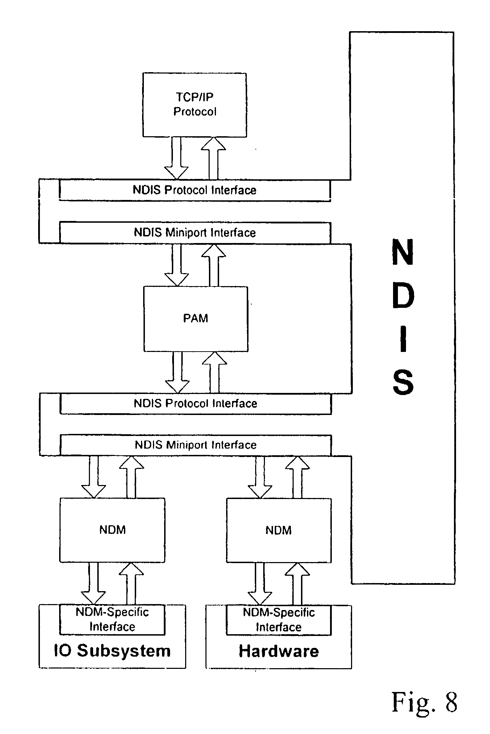

It is preferred that the system is as transparent as possible. This could be accomplished by creating a so-called *Intermediate NDIS Driver*. Such an intermediate driver is a driver arranged between existing protocols and adapters. They appear as adapters to protocols, and as protocols to adapters. The intermediate driver according to the invention is called a *Protocol Adapter Module,* (PAM). The PAM utilizes adapters known as *Network Driver Modules* (NDM) when communicating with the transmission links. A NDIS wrapper with installed PAM and NDM is illustrated in Fig 8.

The PAM binds to the appropriate adapters and/or NDMs. It then exposes itself as a network adapter and is subsequently bound to the overlying protocol(s). It modifies and, if necessary, splits the outgoing packets and adds certain header data to the split packets (also called *fragments*). It keeps track of which NDMs are active and what their transmission performances are. It then uses this as a basis when sending the fragments. It also queues and, if necessary, reassembles incoming fragments before passing them on to the bound overlying protocols.

There is preferably one NDM for each logical link. These are either standard Miniports provided by the manufacturer of the hardware, or specially developed if no regular Miniport is available. In either case they are preferably implemented as standard NDIS adapters.

All device drivers could be implemented as dynamic link libraries (DLLs).

In a preferred embodiment the NDIS will call the drivers during the binding phase when it analyses the registry. The adapters will receive a single call to their initialization routine, at which time they should attempt to claim hardware resources and contact their NICs (Network Interface Card). Protocols, on the other hand, will receive a call for each adapter they're bound to. This allows them to allocate a memory area in which they can store state information on a per-adapter basis.

Adapters will be queried by NDIS as to their capabilities, e.g. maximum packet size, media supported, link speed, etc. NDIS will use this information when processing packets.

When a protocol sends a packet through NDIS, it is expected that the adapter responsible for the actual transmission signals the protocol when it has finished sending the packet. Calling a function in NDIS with a pointer to the packet in question carries this out. This process is known as *completing* the packet.

When the TCP/IP stack has finished opening and initializing its adapters, it broadcasts an ARP (Address Resolution Protocol) Request with the IP address being that of the local interface(s). It does this in order to find out if there are any conflicts in the reachable networks. If no reply is received, the stack assumes that there is no conflict and activates the adapter. If, on the other hand, an ARP reply is received, there is obviously a conflict, so TCP/IP prints an error message and disables the adapter.

When TCP/IP sends a packet it needs to know two things: which adapter to use and which Ethernet address to use for the destination address. The Ethernet address is retrieved by means of an ARP request, and is stored in a table. The adapter to use is resolved by consulting the routing table.

An entry in the routing table preferably contains the following information:

- Network destination: This is the destination IP address.
- Netmask: Before making any comparisons based on the IP address, a logical AND between it and the netmask value is first performed. This allows for making comparisons based on a group of values instead of one at the time.
- Gateway: This is the IP address of the "gateway", i.e. the host that knows where to send packets with an IP address matching that of the Network destination.
- Interface: The Interface is the IP address of the adapter responsible for sending the packet.
- Metric: The Metric is a simple value that would be used when choosing which Interface to use if more than one was possible for the actual route.

*The Transmission Process*

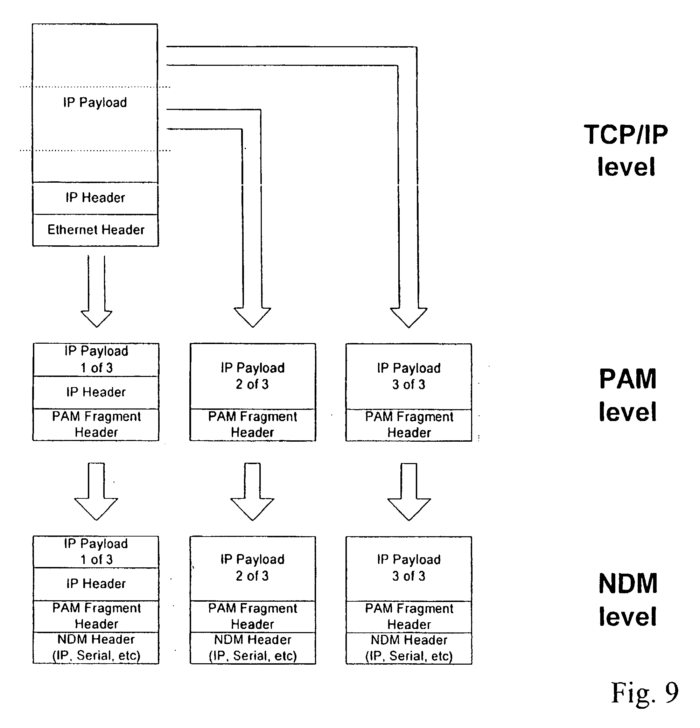

The system according to the example basically consists of two bi-directional data flows; one outgoing from the overlying protocol, and one incoming from the underlying NDMs. However, several incoming or outgoing flows could be used as well. The data flows are received and sent as packets. Each incoming packet is split into fragments if it is too large to fit within a single NDM packet. The fragment (which can consist of a single packet if the packet is small enough) has header data added to it before it is sent to an NDM for further transmission. This is illustrated schematically in Fig 9.

The process is repeated in reverse for incoming fragments, except that multi-fragment packets will be held in a list until all fragments belonging to a certain packet has arrived. If a certain amount of time passes without any new fragments belonging to the partially re-assembled packet have arrived, the packet is considered lost and all fragments belonging to it are discarded.

*An Example of an Inventive Protocol Adapter Module (PAM) according to the invention*

The PAM is responsible for the "one-to-many" interface, i.e. it poses as a single Ethernet adapter to NDIS, but binds to several adapters below it. A PAM is used by the client computer, but also by the router gateway. The only difference between them is that the PAM on the router gateway binds to an Ethernet adapter as well as to the Serial NDM, and intercepts and replies to ARP requests regarding the client's IP address coming from other computers than the router gateway.

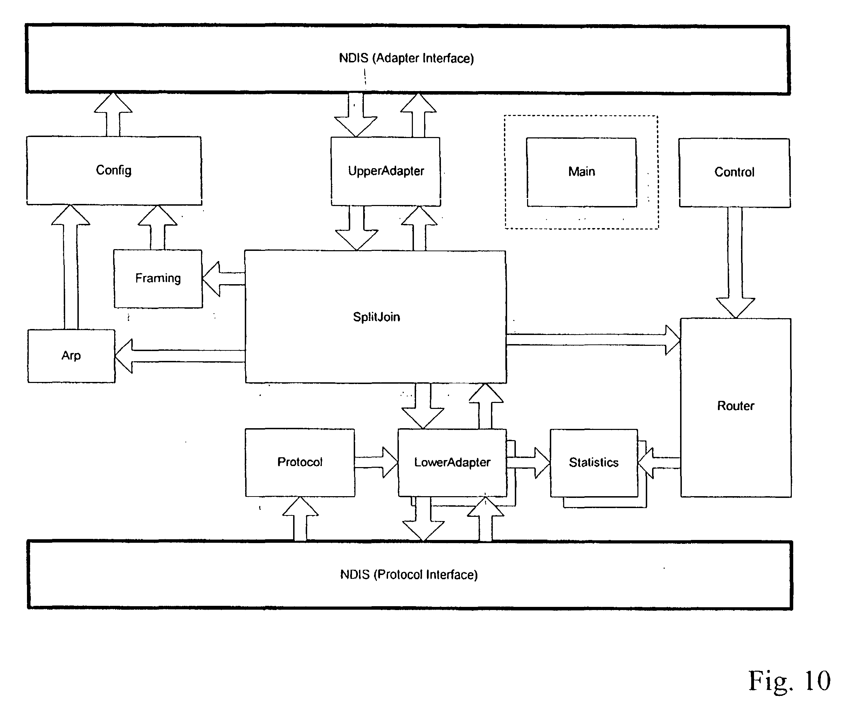

The PAM according to the invention preferably comprises the following classes of objects. The functional relationship between these classes in the PAM is illustrated in Fig 10.

- *Main*: This is the class responsible for the creation of all other objects. It also contains the global driver entry function called by NDIS as soon as the device driver is loaded. The Main object creates all other objects and stores their addresses in public pointers. The other objects are able to access each other through theses pointers by using a global pointer to the Main object.
- *SplitJoin*: This class is the "spider in the web". It receives outgoing packets from UpperAdapter and, if necessary, splits these packets into smaller parts called *fragments*. It then lets Framing add fragment-specific headers before calling the LowerAdapter decided by Router and asking it to send the fragment. It also lets Arp construct fake ARP replies and returns them to UpperAdapter.
  The process is repeated in reverse for incoming fragments; Framing verifies them and removes the unnecessary header data. The fragments are then stored in a list, waiting for the other fragments that make up the original packet to arrive. When the whole packet has been received, SplitJoin reconstructs it and lets Framing add an Ethernet header before sending it to UpperAdapter.
- *Router*: This class decides which NDM will get the next packet fragment. It uses data from the Statistics objects and compares transmission speeds, cost, etc. As of now the algorithm simply assigns the first packet to the first NDM, the second packet to the second NDM, etc in a round-robin fashion.
- *Framing*: The Framing class provides functionality used when adding fragment headers to the packets handed to it by SplitJoin. It also verifies the integrity of incoming fragments and removes the headers. When SplitJoin sends incoming packets to the TCP/IP stack, Framing adds the fake Ethernet headers. In order to do this, it queries Config as to what the PAM's fake Ethernet address is.
- Arp: This class provides functionality used when detecting and replying Ethernet ARP requests. Since TCP/IP will not send anything until it has received an Ethernet address corresponding to the IP destination address, a "fake" Ethernet address must be provided. At the same time, it is not desirable to provide fake Ethernet addresses for anything but the client's IP. Thus Arp must query Config what the client's IP address is.

- *UpperAdapter*: This is the class providing the "one" interface. It is responsible for the upper communication with the protocols bound to the PAM, e.g. TCP/IP. It informs NDIS that it is a "late binding" adapter, i.e. it will not register with NDIS as an Ethernet adapter until at least one NDM has been bound to the protocol part of the PAM. UpperAdapter is also responsible for handling any queries from NDIS, such as the PAM's Ethernet address, link speed, maximum packet size supported, etc.
- *LowerAdapter:* This class represents the lower adapters bound to the PAM. Since it is the protocol's responsibility to keep state information for its adapters, Protocol creates one instance of this class for each NDM that binds. Their main responsibility is notifying SplitJoin of incoming packets.
  In the modified PAM on the router gateway computer in the Prototype Test Configuration, a special LowerAdapter is created for the Ethernet card used when doing IP-forwarding. This LowerAdapter's only task is to intercept ARP requests from other computers regarding the client's IP. Since ARP requests aren't forwarded to the client, the PAM creates an ARP reply and returns it without it even reaching the TCP/IP layer.
- *Protocol*: This class represents the protocol portion of the PAM. During the binding phase, it will be notified by NDIS when it should open the adapters bound to it. As soon as it has opened the first NDM, it calls - UpperAdapter and informs it that it can expose its interface to NDIS.
- *Statistics*: There is one Statistics object for each LowerAdapter, and they have a one-to-one relationship. The Statistics object is called by its LowerAdapter partner each time it sends or receives a packet. It is also informed of bad or incomplete packets, etc. The Router object queries the Statistics objects when making its decision of which LowerAdapter will be used when sending the next packet.
- *Control*: This is the class responsible for communication with other processes. It does so by responding to *Device TO Control Codes*, or *IOCTLs* (Device Input Output Control Code). These are sent by e.g. the user interface when it requests that a transmission parameter be changed.
- *Config*: UpperAdapter calls this class when it initializes. This allows it to read any PAM-specific parameters stored in the registry. It is also called by the LowerAdapters and reads parameters stored on a per-NDM basis. Such parameters could be COM-port to use, transmission speed, inactive at start, etc.

*An example of an Inventive Network Driver Module (NDM) according to the invention*

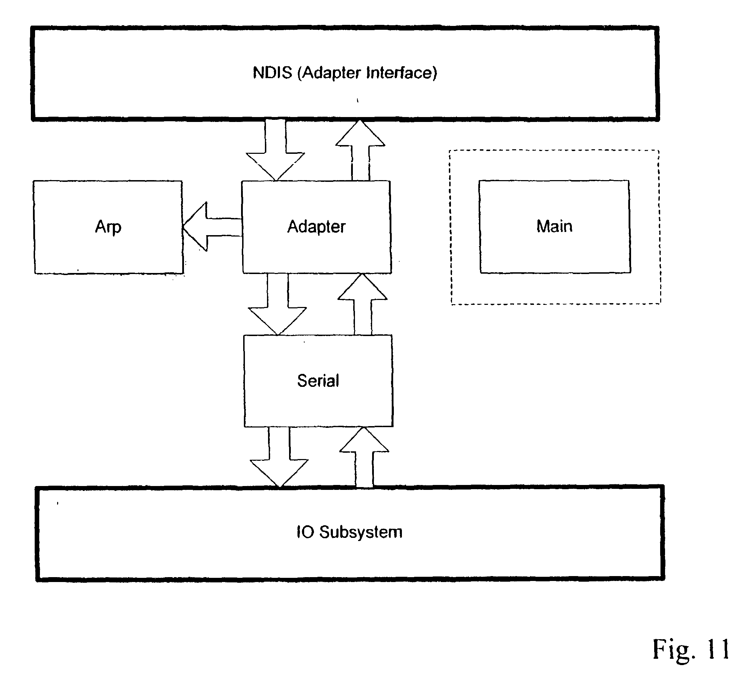

The NDM preferably appears as an Ethernet adapter to NDIS. The NDM according to the invention comprises the following classes of objects. These classes and the relationship between them are illustrated in Fig 11.

- *Main*: This is the class responsible for the creation of all other objects. It also contains the driver entry function. The only global symbol in the NDM is a pointer to the Main object. It, in turn, has public pointers to all instances of the other objects. Main does not participate in any actions once the other objects have been initialized; it merely acts as a "global" data area.
- *Adapter*: This class provides the NDIS adapter interface callbacks. It opens the underlying serial port through use of Serial's Open method. Adapter also contains callbacks called by Serial when it notifies of new incoming packets or the completed sending of an outgoing packet. Sent packets are then completed to NDIS.
- *Arp*: This class analyses packets received from the overlying protocol. If it turns out to be an Ethernet ARP Request, Arp provides methods for constructing a corresponding ARP Reply. Since the PAM intercepts any ARP Requests before they reach the NDM, the functionality of this class is not used when the NDM is bound to the PAM only.
- *Serial*: This class is directly responsible for the translation and transmission of the packet data over the RS-232 medium. It first sends the Serial Test Protocol header, followed by the packet data itself. This send-procedure is carried out in an asynchronous manner. It also receives (and, if synchronization is lost, resynchronizes) data transmitted in the opposite direction. This data is then passed on as a chunk to the callback specified when initializing the Serial class through use of the Open method.
  Data sent to or received from the IO subsystem is transferred by means of *I/O Request Packets* (IRPs), a data structure used by all kernel components in Windows NT.

The implementations for the PAM and the NDM presented above are however merely an example, and several alternatives are possible. For example, the implementation above is based on Windows NT as the operative system (OS). However, the invention may as well be implemented on other OS, such as UNIX/Linux. The references given above to Windows should therefore not be construed as only meaning the specific features and objects provided by Windows, but to comprise any similar feature and object in other OS.

Further, one additional interesting application of the system according to the invention in the mobile data area is the combination of circuit-switched and packet-switched data links. One can use a regular GSM (Global System for Mobile communication) link, or more likely a High-Speed Circuit-Switched Data. Evolution of GSM that allows higher transfer speed HSCSD (High-Speed Circuit-Switched Data) link and combine that with a GPRS (General Packet Radio Service) link. The HSCSD link would terminate as usual, though fragments sent through it would be directed to the router gateway, since the HSCSD connection eventually ends up on the Internet. The GPRS link, being packet-switched from the beginning, would be treated in a similar manner. The greatest point of having this setup, would be that the GPRS link could provide an "always-on" quality, enabling the user to be connected constantly without paying except when transferring data. The HSCSD link could then be enabled when the need for more bandwidth arises, keeping the total cost at a minimum while at the same time providing greater transmission speeds than is possible with either GPRS or HSCSD alone. There are a number of possible optimization options, such as the balancing of speed and cost, keeping the delay introduced when connecting with the HSCSD link at a minimum, etc.

*An Example of Another Inventive Embodiment of the invention*

The invention, as described above, may further be used as a method by which a computer may transparently use multiple communication links with individual IP addresses. The method enables roaming between IP network technologies.

The benefits of this solution are many:

- The connection is maintained even when individual connection links are dropped because of coverage, overload, bad reception or any other reason
- Only one IP address is used externally which removes any troubles when changing between the links (only for IP addressing)
- It is possible to optimise the transfer for speed or cost
- Roaming between different technologies or different instances of the same technology is possible (e.g. it is possible to roam with WLAN which in itself has problems providing the possibility). During the time the user is not covered by wLAN, any other communication link is used to maintain the connection.
- The user will get the benefits of all the different communication links, giving a solution that is better than any of the individual links.

In the connected world of today, having an Internet connection is for many people and applications an absolute necessity. Until now people have connected to the Internet through a multitude of methods, e.g.

- Modem
- Local Area Network
- ISDN
- Cable
- Etc

So far only one of these has been the active communication link at any given time.

Although ISDN is in fact able to use multiple communication links (B-channels) in parallel, those links terminate at the same location and are circuit switched. In principle, therefore, ISDN may be regarded as a single communication link.

Mobility is an issue that has not been of great importance in the past. Some advances have been made but the available bandwidth has been much too low to render it of any practical use. Mobile communication solutions have mostly been of a semi-stationary character, e.g. portable computers with a built-in modem that is used to connect to the Public Switched Telephone Network (PSTN).

In the future we are likely to see a more complex scenario with a multitude of optional ways to connect to the Internet. Depending on various reasons (required bandwidth, cost issues, coverage, practical feasibility etc) the user will normally select one of the available communication links at a time. This will work for stationary users who can make a selection and continue using it for a few hours. For mobile users, the situation is not quite as simple, even though increases in mobile bandwidth will make mobile data communication more interesting.

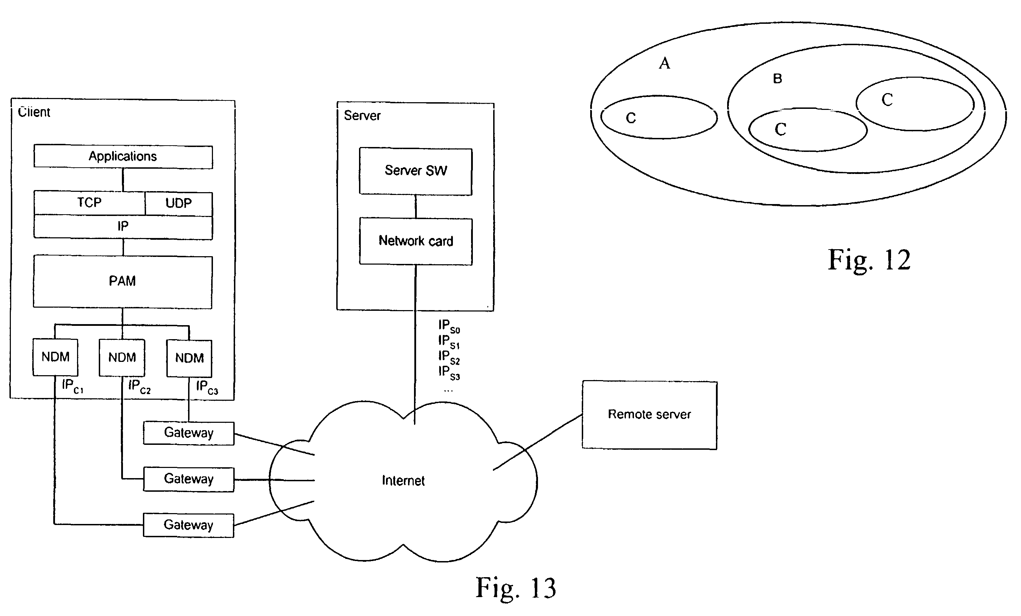

Moving around, the user will be within coverage of different network access methods at different times, as is shown schematically in Fig 12. At home or in the office, wireless LAN (WLAN) will probably be the preferred method. At other times the user may be able to use connection points based on Bluetooth or other short-range systems. When out of range of all other systems a mobile communication system such as GPRS, EDGE or WCDMA (Wide-band Code Division Multiple Access) or any of their successors will provide coverage. Of course more traditional methods like LAN or modem are still possible. The following table indicates the range of some known communication technologies:

| Long-range (A) | Medium-range (B) | Short-range (C) |
|---|---|---|
| GSM | WLAN | 56k modem |
| HSCSD | | ISDN |
| GPRS | | LAN |
| EDGE | | Bluetooth-LAN |
| WCDMA | | |
| PCS | | |

Switching between these systems means that the user will constantly change the IP address by which it is known on the network. This, in turns, means that the user will have to re-establish connections. This involves:

- Disconnecting from the first communication link
- Connecting via a new connection link (which may or may not function)
- Restarting transfers that are already in progress (file transfers etc), thereby aborting transfers that may have taken minutes or even hours so far but have not finished
- Re-establishing IPSec tunnels since the authentication will fail because the IP address has changed

To some extent WCDMA and other wide spread mobile systems will make it possible to be mobile while transferring data. The cost associated with such methods will make it infeasible for constant use. The user will therefore still have to choose the connection method.

A solution to the problem described above is to tunnel the data on multiple communication links. One or several of these links are active at any one time and the system will support adding or removing links, either manually or automatically. The reason that communication links will be added or removed could be, but is not restricted to:

- Losing coverage
- A communication link that is faster or cheaper than the one(s) currently used has been added (e.g. arriving to the office)
- Manual selection by the user

To enable the solution, two functional entities must be added:

- Client software
- Server software

The core of the client software is placed below the TCP/IP stack of the client. The client software is responsible for forwarding data on one or more of the available communication links. An embodiment of the system according to this aspect of the invention is schematically illustrated in Fig 13.

However, the client is not restricted to use three communication links as depicted in the illustration. Also, the type of link is independent of the solution as long as all the communication links are capable of transporting IP packets to and from the Internet.

The server software receives data from multiple clients, each of which may transmit data over multiple communication links. The server forwards the data to the remote server and relays the response back to the client that made the initial request. The remote server may be any server supplying information to the client, e.g. a web server.

The system may offer the possibility to restrict the usage to individual users or groups of users.

As data is received from remote servers by the server there are two ways to identify which client should receive the data:

- Port numbers
- IP addresses

These two methods will be described in the following two sections.

The benefits of this solution are many:

- The connection is maintained even when individual connection links are dropped because of coverage, overload, bad reception or any other reason
- Only one IP address is used externally which removes any troubles when changing between the links (only for IP addressing)
- It is possible to optimise the transfer for speed or cost
- Roaming between different technologies or different instances of the same technology is possible (e.g. it is possible to roam with WLAN which in itself has problems providing the possibility). During the time the user is not covered by WLAN (Wireless Local Area Network), any other communication link is used to maintain the connection.
- The user will get the benefits of all the different communication links, giving a solution that is better than any of the individual links.

Port addressing works by using port numbers to identify the intended destination of data. Data sent from a client will have one of the IP addresses of the client as sender. The server will open a connection to the remote server, replace the sender address with its own ($IP_{S0}$) and then forward the data. When the server receives a reply it examines the port address to decide which client should receive the result. The server then sends the data, together with any other information the client needs to reconstruct the IP packet.

The PAM (Protocol Adapter Module) reports an IP address to the TCP/IP stack. This address may be the IP address of one of the links but it does not have to be. If it is the IP address of one of the links, the address may still be used even if that communication link is dropped, thus making it possible to maintain a connection even if the link with that IP address is dropped.

Port addressing works for most transfers. It specifically works for web (HTTP) transfers. Port addressing will be important when IP addresses are a scarce resource since a single IP address ($IP_{S0}$) on the server can serve many clients. More clients can be served through this method by allocating additional IP addresses from the pool of addresses ($IP_{S0}$-$IP_{Sn}$) for port addressing.

In some cases the port addressing may not be used. In those cases IP addressing will be used.

The server is in this case given a range of IP addresses ($IP_{S0}$-$IP_{Sn}$ in the illustration, minus any that are used for port addressing) that may be given to clients. These addresses are allocated to clients on a temporary basis, in much the same way as when using DHCP (Dynamic Host Configuration Protocol).

The client (or more specifically the PAM) requests a dynamic or static IP address from the server. This address ($IP_{Sx}$) could be the one that PAM reports to the TCP/IP stack, although the stack could be configured to use a static IP address that will never be.visible outside the client. All packets sent will have this address as the sender address. PAM sends packets (after possibly having split them into smaller fragments) on the multiple communication links, each with its own IP address, through gateways to the server. The server reassembles the packets and forwards the resulting IP packet, i.e. a packet identical to the one that was sent from the IP layer of the Client. The IP packet that leaves the server has the IP address $IP_{Sx}$ as sender.

IP packets sent from the network to the client are addressed to the IP address, belonging to the client ($IP_{Sx}$). Packets sent to that address are routed to the server, which forwards them to the client by changing the destination IP address on the fly, possible after having split the packet into fragments. The server does not have to use port numbers since the IP address uniquely identifies the destination.

PAM recollects the fragments and reconstructs the initial IP packet, which is passed to the IP layer of the TCP/IP stack.

The client sees PAM as a regular network adapter. The network likewise views the IP address of the client as the only IP address of the client. What happens in the tunnel is completely transparent to the communication of the above layers. Consequently, all applications will work as intended, ignorant of the multiple communication links used to transport the data.

IP addressing requires the use of an extra IP address for every active client. Because of that fact port addressing will be used whenever possible as long as IP addresses are scarce.

The invention may be used to combine different known communication methods, such as HSCSD & GPRS. In this case the user has an HSCSD (High Speed Circuit Switched Data) card in the computer and an external GPRS telephone. Each of these could be used for mobile data communication. With the solution presented in this paper, they can be used in conjunction. GPRS will then be used to stay on-line while HSCSD provides the possibility to give dedicated bandwidth. To the user this means less cost and higher bandwidth. To the operator it means a more efficient use of radio resources.

Another example is to combine WLAN & WCDMA. In this case the user has a computer with WLAN and WCDMA capabilities, either internally or externally. WLAN is the preferred method of communicating since it provides higher bandwidth as well as lower cost. WLAN, however, lacks coverage and may not provide to possibility to roam. WCDMA is therefore used to maintain the connection when moving between different WLAN areas. It is not necessary to transfer large amounts of data over WCDMA during those times. Only small amounts of data need to be transferred to keep the connection alive until the user reaches another area that is covered by WLAN. As soon as the user once again is within WLAN coverage, either WLAN or WCDMA is used to report the new IP address for the WLAN link to the server.

Still further, Bluetooth and GPRS/EDGE/WCDMA may be combined. In this case a mobile communicator is equipped with both Bluetooth as well as the capability to communicate with a mobile communication network such as GPRS, EDGE or WCDMA. While being within range of a network that is accessible via Bluetooth that network is the primary choice because of higher speed and lower cost. When moving around, the mobile network is used to transfer data. By implementing the method described in this paper the communication equipment is always on-line and always using the preferred technology among those which are available.

The invention has been described herein by means of one embodiment. Several modifications are, however, possible. For instance, the system may be used for transmission between two equivalent units, none of which operates as server and is connected to an additional network. In addition, other types of optimisation are conceivable, and consequently also other types of information are required. In addition, the information could be gathered continuously at predetermined times/or when needed, or else be entered at separate occasions. The system could also comprise a larger number of units, such as more clients who communicate with one common server. These and other obvious varieties must be regarded to be within the scope of protection of the invention as the latter is defined in the appended claims.

**Claims**

1. A system for transmission of data between at least two units (1, 2) adapted to inter-communicate, said system comprising at least two possible communication routes (3 -5) having different characteristics, wherein the characteristics of at least one of said routes is variable during the data transmission, and wherein each unit comprises a transmission unit including means for gathering information on the characteristics of the possible communication routes, said information at least partly being gathered during the data transmission,
   **characterized in that** each unit further comprises means for dividing, on the basis of said information and of an optimising condition, the flow of data, preferably in the form of data packets, among at least two of said communication routes, and wherein each unit further comprises a corresponding receiver unit with means for re-combining the data flow transmitted via said at least two communication routes, whereby the division of the flow of data between said at least two communication routes is continuously optimized in accordance with said optimizing condition during the data transmission.

2. The system of claim 1, wherein the transmission unit further comprises means for dividing the flow of data, preferably in the form of data packets, wherein the division among the communication routes is achieved by , for each such divided part and on the basis of said gathered information and of an optimising condition, choosing one of said at least two communication routes.

3. A system as claimed in claim 1 or 2, wherein said transmission unit is adapted to continuously gather information on the characteristics of said communication routes (3 -5) and to automatically perform said division of the flow of data on the basis of that information.

4. A system as claimed in any one of claims 1-3, wherein the characteristics on which said transmission unit gathers information are one or several of the following ones, viz. fixed and variable prices, maximum and current speed, packet size, transportation time, ID or similar information on forwarding units, and predetermined priorities.

5. A system as claimed in any one of the preceding claims, wherein the optimisation condition comprises one or several optimising parameters, such as price, speed, preferences with respect to intermediary forwarding units.

6. A system as claimed in claim 5, wherein the optimising condition comprises several optimising parameters and an indication, given in advance, of priorities relating to said optimising parameters.

7. A system as claimed in any one of the preceding claims, wherein at least one of said communication routes (3) is a wireless route.

8. A system as claimed in claim 7, wherein said communication routes are wireless communication routes comprising several base stations.

9. A system as claimed in any one of the preceding claims, wherein at least one of said communicating units (2) in

16

turn is connected to a further network for forwarding data to and from said network.

**10.** A system as claimed in any one of the preceding claims, said transmission unit comprising a module having a uniform interface to additional systems while at the same time being capable of communicating via said at least two communication routes, the latter preferably differing with respect to at least interface or transportation medium.

**11.** A system as claimed in claim 1 or 2, wherein at least one of said at least two communication routes is provided by a separate unit wirelessly connected to one of said two units.

**12.** A system as claimed in claim 11, wherein compensation for utilizing said separate unit is solved by means of an intelligent billing system.

**13.** A method of transmitting data between at least two units (1, 2), which are adapted to inter-communicate via at least two possible communication routes (3, 5) having different characteristics, wherein the characteristics of at least one of said routes is variable during the data transmission, comprising the step of:

gathering information on the characteristics of the possible communication routes, wherein said information at least partly is gathered during the data transmission;

**characterized by** the further steps of:

gathering information on an optimising condition;
dividing said flow of data on the basis of said information;
transmitting each part of the thus divided data flow, preferably in the form of data packets, to one of said two communication routes, the choice of communication route for each part being controlled by the information gathered and by the optimisation condition given; and
receiving and re-combining the data flow transmitted via said at least two communication routes;

whereby the division of the flow of data between said at least two communication routes is continuously optimized in accordance with said optimizing condition during the data transmission.

**14.** A method as claimed in claim 13, wherein the characteristics on which information is gathered are one or several of the following: fixed and variable prices, maximum and current speed, packet size, transportation time, ID or similar information on forwarding units, and predetermined priorities.

**15.** A method as claimed in any one of claims 13-14, wherein the optimising condition comprises one or several optimising parameters, such as price, speed, preferences regarding intermediary, furthering units.

**16.** A method as claimed in any one of claims 13-15, comprising the further step of transmitting the data received to another network.

**17.** A method as claimed in claim 13, wherein at least one of said at least two communication routes is provided by a separate unit wirelessly connected to one of said two units.

**18.** A method as claimed in claim 17, wherein compensation for utilizing said separate unit is solved by means of an intelligent billing system.

**19.** A terminal unit for transmission of data via at least two communication routes (3 -5) having different characteristics, wherein the characteristics of at least one of said routes is variable during the data transmission, said terminal unit comprising a transmission unit (1) which is connected to said at least two communication routes (3 -5) and a receiver unit (2),
**characterized in that** the transmission unit is adapted to divide a flow of data into parts and to transmit said data flow parts essentially simultaneously on said at least two communication routes (3 -5), and **in that** the receiver unit (2) is adapted to receive parts of a data flow on different lines and to re-combine them into one flow.

**20.** A terminal unit as claimed in claim 19, wherein at least one and preferably all communication routes (3) are wireless routes.

**21.** A terminal unit as claimed in claim 20, wherein it comprises several antennae and preferably one antenna per wireless communication route.

**22.** A terminal unit as claimed in claim 20 or 21, said terminal unit comprising several transmission unit, and preferably one transmission unit per wireless communication route.

**Patentansprüche**

**1.** System zur Übertragung von Daten zwischen mindestens zwei Einheiten (1, 2), die zur Interkommunikation angepasst sind, wobei dieses System mindestens zwei mögliche Kommunikationswege (3 - 5) umfasst, die unterschiedliche Merkmale haben, wobei das Merkmal mindestens eines dieser Wege während der Datenübertragung variabel ist, und wobei jede Einheit eine Übertragungseinheit umfasst, die Mittel zum Erfassen von Informationen über die Merkmale der möglichen Kommunikationswege umfasst, wobei die Informationen zumindest teilweise während der Datenübertragung erfasst werden,
**dadurch gekennzeichnet, dass** jede Einheit des Weiteren Mittel zum Teilen des Datenflusses basierend auf den Informationen und auf einer Optimierungsbedingung umfasst, vorzugsweise in der Form von Datenpaketen, zwischen mindestens zwei der Kommunikationswege, und wobei jede Einheit des Weiteren eine entsprechende Empfangseinheit mit Mitteln zur Wiederverbindung des durch die mindestens zwei Kommunikationswege übertragenen Datenflusses umfasst, wobei die Teilung des Datenflusses zwischen den mindestens zwei Kommunikationswegen während der Datenübertragung kontinuierlich gemäß der Optimierungsbedingung optimiert wird.

**2.** System nach Anspruch 1, wobei die Übertragungseinheit des Weiteren Mittel zum Teilen des Datenflusses umfasst, vorzugsweise in der Form von Datenpaketen, wobei das Teilen zwischen den Kommunikationswegen erreicht wird durch Wählen von einem der mindestens zwei Kommunikationswege für jeden derart geteilten Teil und basierend auf den erfassten Informationen und auf einer Optimierungsbedingung.

**3.** System nach Anspruch 1 oder 2, wobei die Übertragungseinheit angepasst ist, um kontinuierlich Informationen über die Merkmale der Kommunikationswege (3 - 5) zu erfassen und um automatisch die Teilung des Datenflusses basierend auf diesen Informationen durchzuführen.

**4.** System nach einem der Ansprüche 1-3, wobei die Merkmale, über die die Übertragungseinheit Informationen sammelt, eine oder mehrere der nachfolgenden sind, nämlich feste und variable Preise, maximale und momentane Geschwindigkeit, Paketgröße, Transportzeit, ID oder ähnliche Information über Übermittlungseinheiten, und vorbestimmte Prioritäten.

**5.** System nach einem der vorhergehenden Ansprüche, wobei die Optimierungsbedingung einen oder mehrere Optimierungsparameter, wie zum Beispiel, Preis, Geschwindigkeit, Präferenzen in Bezug auf Zwischenübermittlungseinheiten, umfasst.

**6.** System nach Anspruch 5, wobei die Optimierungsbedingung mehrere Optimierungsparameter und eine im Voraus gegebene Angabe von Prioritäten in Bezug auf diese Optimierungsparameter umfasst.

**7.** System nach einem der vorhergehenden Ansprüche, wobei mindestens einer der Kommunikationswege (3) ein drahtloser Weg ist.

**8.** System nach Anspruch 7, wobei die Kommunikationswege drahtlose Kommunikationswege sind, die mehrere Basisstationen umfassen.

**9.** System nach einem der vorhergehenden Ansprüche, wobei mindestens eine der kommunizierenden Einheiten (2) wiederum mit einem weiteren Netz verbunden ist zum Übermitteln von Daten zu und von diesem Netz.

**10.** System nach einem der vorhergehenden Ansprüche, wobei die Übertragungseinheit ein Modul umfasst, das eine einheitliche Schnittstelle mit zusätzlichen Systemen hat, während es gleichzeitig die Fähigkeit besitzt, über die mindestens zwei Kommunikationswege zu kommunizieren, wobei letztere sich vorzugsweise in Bezug auf mindestens die Schnittstelle oder das Transportmedium unterscheiden.

**11.** System nach Anspruch 1 oder 2, wobei mindestens einer der mindestens zwei Kommunikationswege durch eine separate Einheit bereitgestellt wird, die drahtlos mit einer der zwei Einheiten verbunden ist.

12. System nach Anspruch 11, wobei die Vergütung für die Benutzung dieser separaten Einheit mit Hilfe eines intelligenten Zahlungssystems gelöst ist.

13. Verfahren zum Übertragen von Daten zwischen mindestens zwei Einheiten (1, 2), die angepasst sind zur Interkommunikation über mindestens zwei mögliche Kommunikationswege (3, 5), die unterschiedliche Merkmale haben, wobei das Merkmal mindestens eines dieser Wege während der Datenübertragung variabel ist, den folgenden Schritt umfassend:

Erfassen von Informationen über die Merkmale der möglichen Kommunikationswege, wobei diese Informationen zumindest teilweise während der Datenübertragung erfasst werden;

**gekennzeichnet durch** die weiteren Schritte des:

Erfassens von Informationen über eine Optimierungsbedingung;
Teilen des Datenflusses basierend auf diesen Informationen;
Übertragen jedes Teiles des derart geteilten Datenflusses, vorzugsweise in der Form von Datenpaketen, an einen der zwei Kommunikationswege, wobei die Auswahl des Kommunikationswegs für jeden Teil **durch** die erfasste Information und **durch** die gegebene Optimierungsbedingung gesteuert wird; und
Empfangen und Wiederverbinden des über die mindestens zwei Kommunikationswege übertragenen Datenflusses;

wobei das Teilen des Datenflusses zwischen den mindestens zwei Kommunikationswegen während der Datenübertragung kontinuierlich gemäß der Optimierungsbedingung optimiert wird.

14. Verfahren nach Anspruch 13, wobei die Merkmale, über die Informationen erfasst werden, eine oder mehrere der nachfolgenden sind: feste und variable Preise, maximale und momentane Geschwindigkeit, Paketgröße, Transportzeit, ID oder ähnliche Information über Übermittlungseinheiten, und vorbestimmte Prioritäten.

15. Verfahren nach einem der Ansprüche 13-14, wobei die Optimierungsbedingung einen oder mehrere Optimierungsparameter, wie zum Beispiel, Preis, Geschwindigkeit, Präferenzen in Bezug auf Zwischenförderungseinheiten, umfasst.

16. Verfahren nach einem der Ansprüche 13-15, des Weiteren umfassend den zusätzlichen Schritt des Übertragens der empfangenen Daten an ein anderes Netz.

17. Verfahren nach Anspruch 13, wobei mindestens einer der mindestens zwei Kommunikationswege durch eine separate Einheit bereitgestellt wird, die drahtlos mit einer dieser zwei Einheiten verbunden ist.

18. Verfahren nach Anspruch 17, wobei die Vergütung für die Benutzung dieser separaten Einheit mit Hilfe eines intelligenten Zahlungssystems gelöst wird.

19. Terminaleinheit zur Übertragung von Daten über mindestens zwei Kommunikationswege (3-5), die unterschiedliche Merkmale haben, wobei das Merkmal von mindestens einem dieser Wege während der Datenübertragung variabel ist, wobei die Terminaleinheit eine Übertragungseinheit (1) umfasst, die mit den mindestens zwei Kommunikationswegen (3 - 5) und einer Empfangseinheit (2) verbunden ist,
**dadurch gekennzeichnet, dass** die Übertragungseinheit angepasst ist, um einen Datenfluss in Teile zu teilen und diese Datenflussteile im Wesentlichen simultan auf den mindestens zwei Kommunikationswegen (3 - 5) zu übertragen, und dadurch, dass die Empfangseinheit (2) angepasst ist, um Teile eines Datenflusses auf verschiedenen Leitungen zu empfangen und diese wieder zu einem Fluss zu verbinden.

20. Terminaleinheit nach Anspruch 19, wobei mindestens einer und vorzugsweise alle Kommunikationswege (3) drahtlose Wege sind.

21. Terminaleinheit nach Anspruch 20, die mehrere Antennen und vorzugsweise eine Antenne pro drahtlosen Kommunikationsweg umfasst.

**22.** Terminaleinheit nach Anspruch 20 oder 21, wobei die Terminaleinheit mehrere Übertragungseinheiten, und vorzugsweise eine Übertragungseinheit pro drahtlosen Kommunikationsweg umfasst.

**Revendications**

**1.** Système de transmission de données entre au moins deux unités (1, 2) adaptées pour communiquer entre elles, ledit système comprenant au moins deux voies de communication possibles (3-5) ayant différentes caractéristiques, dans lequel les caractéristiques d'au moins une desdites voies varient pendant la transmission des données, et dans lequel chaque unité comprend une unité de transmission comprenant des moyens pour récolter des informations concernant les caractéristiques des voies de communication possibles, lesdites informations étant au moins partiellement récoltées pendant la transmission des données,
**caractérisé en ce que** chaque unité comprend en outre des moyens pour partager, sur la base desdites informations et d'une condition d'optimisation, le flux de données, de préférence sous forme de paquets de données, entre au moins deux desdites voies de communication, et, dans ledit système, chaque unité comprend en outre une unité de réception correspondante avec des moyens de recombinaison du flux de données transmis via au moins lesdites deux voies de communication, moyennant quoi le partage du flux de données entre au moins lesdites deux voies de communication est optimisé en continu en fonction de ladite condition d'optimisation pendant la transmission des données.

**2.** Système selon la revendication 1, dans lequel l'unité de transmission comprend par ailleurs des moyens de partage du flux de données, de préférence sous la forme de paquets de données, dans lequel le partage entre les voies de communication est réalisé, pour chacune des parties partagées de la sorte et sur la base desdites informations récoltées et d'une condition d'optimisation, en choisissant l'une desdites au moins deux voies de communication.

**3.** Système tel que revendiqué selon l'une des revendications 1 et 2, dans laquelle ladite unité de transmission est adaptée pour récolter de manière continue des informations sur les caractéristiques desdites voies de communication (3-5) et pour automatiquement exécuter ledit partage du flux de données sur la base de ces informations.

**4.** Système tel que revendiqué selon l'une quelconque des revendications 1 à 3, dans lequel les caractéristiques pour lesquelles ladite unité de transmission récolte des informations sont l'une ou plusieurs des caractéristiques suivantes, à savoir les prix fixes et variables, la vitesse maximale et actuelle, la taille du paquet, le temps de transport, l'ID ou une information similaire concernant des unités de retransmission, et des priorités déterminées.

**5.** Système tel que revendiqué selon l'une quelconque des revendications précédentes, dans lequel la condition d'optimisation comprend un ou plusieurs paramètres d'optimisation tel que le prix, la vitesse, des préférences en ce qui concerne des unités de retransmission intermédiaires.

**6.** Système tel que revendiqué selon la revendication 5, dans lequel la condition d'optimisation comprend plusieurs paramètres d'optimisation et une indication donnée à l'avance concernant les priorités pour lesdits paramètres d'optimisation.

**7.** Système tel que revendiqué selon l'une quelconque des revendications précédentes, dans lequel au moins une desdites voies de communication (3) est une voie sans fil.

**8.** Système tel que revendiqué selon la revendication 7, dans lequel lesdites voies de communication sont des voies de communication sans fil comprenant plusieurs stations de base.

**9.** Système tel que revendiqué selon l'une quelconque des revendications précédentes, dans lequel au moins l'une desdites unités de communication (2) est connectée à son tour à un autre réseau pour la retransmission de donnée vers, et en provenance, dudit réseau.

**10.** Système tel que revendiqué selon l'une quelconque des revendications précédentes, ladite unité de transmission comprenant un module ayant une interface uniforme avec des systèmes additionnels tout en étant en même temps capable de communiquer via au moins lesdites deux voies de communication, ces dernières étant de préférence différentes en fonction au moins de l'interface ou du support de transport.

**11.** Système tel que revendiqué selon l'une des revendications 1 et 2, dans lequel au moins l'une desdites deux voies de communication est munie d'une unité séparée raccordée sans fil à l'une desdites deux unités.

12. Système tel que revendiqué selon la revendication 11, dans lequel la compensation pour l'utilisation de ladite unité séparée est résolue à l'aide d'un système de facturation intelligent.

13. Méthode de transmission de données entre au moins deux unités (1, 2) qui sont adaptées pour communiquer entre elles via au moins deux voies de communication (3, 5) possibles ayant des caractéristiques différentes, où les caractéristiques de l'une au moins desdites voies varient pendant la transmission des données, comprenant les étapes suivantes :

récolte des informations concernant les caractéristiques des voies de communication possibles, étape dans laquelle lesdites informations sont au moins en partie récoltées pendant la transmission des données ;

**caractérisée par** les étapes suivantes :

récolte des informations concernant une condition d'optimisation ;
partage dudit flux de données sur la base desdites informations ;
transmission de chaque partie du flux de données ainsi partagé, de préférence sous forme de paquets de données, à l'une desdites deux voies de communication, le choix de la voie de communication pour chaque partie étant commandé par l'information récoltée et la condition d'optimisation donnée; et
réception et recombinaison du flux de données transmis via au moins lesdites deux voies de communication ;
moyennant quoi le partage du flux de données entre au moins lesdites deux voies de communication est optimisé en continu en fonction de ladite condition d'optimisation pendant la transmission des données.

14. Méthode telle que revendiquée selon la revendication 13, dans laquelle les caractéristiques pour lesquelles des informations sont collectées sont une ou plusieurs caractéristiques des suivantes : prix fixes et variables, vitesse maximale et actuelle, taille du paquet, temps de transport, ID ou information similaire concernant des unités de retransmission, et priorités prédéfinies.

15. Méthode telle que revendiquée selon l'une quelconque des revendications 13-14, dans laquelle la condition d'optimisation comprend un ou plusieurs paramètres d'optimisation tels que le prix, la vitesse, et les préférences concernant les unités de retransmission intermédiaires.

16. Méthode telle que revendiquée selon l'une quelconque des revendications 13 à 15, comprenant l'étape supplémentaire de transmission des données reçues vers un autre réseau.

17. Méthode telle que revendiquée selon la revendication 13, dans laquelle au moins l'une desdites deux voies de communication est munie d'une unité séparée raccordée sans fil à l'une desdites deux unités.

18. Méthode telle que revendiquée selon la revendication 17, dans laquelle la compensation pour l'utilisation de ladite unité séparée est résolue à l'aide d'un système de facturation intelligent.

19. Unité terminale pour la transmission de données via au moins deux voies de communication (3-5) ayant des caractéristiques différentes, dans laquelle les caractéristiques de l'une au moins desdites voies varient pendant la transmission des données, ladite unité terminale comprenant une unité de transmission (1) raccordée au moins auxdites deux voies de communication (3-5) et une unité de réception (2),
**caractérisé en ce que** l'unité de transmission est adaptée pour partager un flux de données en parties et pour transmettre lesdites parties de flux de données essentiellement de manière simultanée via au moins lesdites deux voies de communication (3-5), et **en ce que** l'unité de réception (2) est adaptée pour recevoir des parties d'un flux de données sur différentes lignes et pour les recombiner en un seul flux.

20. Unité terminale telle que revendiquée selon la revendication 19, dans laquelle au moins une et de préférence toutes les voies de communication (3) sont des voies sans fil.

21. Unité terminale telle que revendiquée selon la revendication 20, **caractérisé en ce qu'**elle comprend plusieurs antennes, et de préférence une antenne par voie de communication sans fil.

22. Unité terminale telle que revendiquée selon l'une des revendications 20 et 21, ladite unité terminale comprenant plusieurs unités de transmission, et de préférence une unité de transmission par voie de communication sans fil.

Fig. 1

Fig. 2

Fig. 3

EP 1 175 757 B1

Fig. 4

EP 1 175 757 B1

Fig. 5

EP 1 175 757 B1

Fig. 6

Fig. 7

Fig. 8

| IP Payload |
| :---: |
| |
| IP Header |
| Ethernet Header |

**TCP/IP level**

| IP Payload 1 of 3 |
| :---: |
| IP Header |
| PAM Fragment Header |

| IP Payload 2 of 3 |
| :---: |
| |
| PAM Fragment Header |

| IP Payload 3 of 3 |
| :---: |
| |
| PAM Fragment Header |

**PAM level**

| IP Payload 1 of 3 |
| :---: |
| IP Header |
| PAM Fragment Header |
| NDM Header (IP, Serial, etc) |

| IP Payload 2 of 3 |
| :---: |
| |
| PAM Fragment Header |
| NDM Header (IP, Serial, etc) |

| IP Payload 3 of 3 |
| :---: |
| |
| PAM Fragment Header |
| NDM Header (IP, Serial, etc) |

**NDM level**

Fig. 9

Fig. 10

Fig. 11

NDIS (Adapter Interface)

Main

Adapter

Serial

Arp

IO Subsystem

EP 1 175 757 B1

Client

Applications

| TCP | UDP |

IP

PAM

NDM  NDM  NDM

$IP_{C1}$  $IP_{C2}$  $IP_{C3}$

Gateway

Gateway

Gateway

Server

Server SW

Network card

$IP_{S0}$
$IP_{S1}$
$IP_{S2}$
$IP_{S3}$
...

Internet

Remote server

Fig. 13

A

B

C

C

C

Fig. 12